# EUROPEAN PATENT SPECIFICATION

(11) **EP 2 197 928 B1**
(45) Date of publication and mention of the grant of the patent: **03.05.2017**
(21) Application number: 08804790.7
(22) Date of filing: 26.09.2008
(51) Int. Cl.: C08G 14/08, C08G 14/06, C08G 14/10, C08G 8/28, C08G 14/12, C08L 61/06, C08K 5/053, D04H 1/4209, D04H 1/4218, D04H 1/587, D04H 1/645

(54) **A WATER DILUTABLE RESIN COMPOSITION**
WASSERVERDÜNNBARE HARZZUSAMMENSETZUNG
COMPOSITION DE RÉSINE HYDROSOLUBLE

(30) Priority: 27.09.2007 GB 0718857
(43) Date of publication of application: 23.06.2010
(73) Proprietor: Prefere Resins Holding GmbH, 15537 Erkner (DE)
(72) Inventor: HERWIJNEN, Henrikus W. G., 3464 Hausleiten-Goldgeben (AT); PROCK, Christopher, 3910 Zwettl (AT)
(74) Representative: Hoyng Rokh Monegier LLP
(86) International application number: PCT/EP2008/062912
(87) International publication number: WO 2009/040415

(56) References cited:
- EP-A- 1 226 749
- WO-A-98/53001
- GB-A- 1 155 004
- US-A- 4 339 361
- US-A- 5 708 121

## Description

The invention relates to a water dilutable resin composition comprising a resin that is a reaction product of an aldehyde and a hydroxyl-aromatic compound, preferably a phenol formaldehyde resin, and an amino compound comprising 2 - 6 amino groups, preferably urea wherein the resin is of the resol type having an initial molar ratio of aldehyde to hydroxyl-aromatic compound from 2.5 to 5.5. The invention further relates to a process for the manufacture of the resin composition, to the use of the resin composition as a binder material for nonwoven fibrous material, in particular insulation materials, and to a process for the manufacture of such insulation material.

Phenol binder materials, in particular phenol formaldehyde resins are known basic chemicals for classic insulation resin compositions. A problem with these chemicals is that both phenol and formaldehyde are toxic and have a relatively high vapour pressure, causing a relatively high amount of emission of these chemicals into the environment. This problem has been addressed in the prior part in different ways.

WO96/26164 describes a phenol formaldehyde resin composition for use as a binder in insulation materials wherein the emission of phenol is reduced by using an excess of formaldehyde, wherein the emission of the excess formaldehyde is reduced by addition of ammonia and wherein the emission of ammonia is reduced by reacting the ammonia with a sugar compound.

The inventors have found that the use of sugars in a resin composition results in an unacceptably decrease of the wet mechanical properties of the resin composition as insulation resin. The wet mechanical properties are important because the insulation material can be exposed to humid conditions. Further, the addition of ammonia decreases the storage stability of the resin. Therefore, ammonia can only be added just in time before applying the resin composition to the non-woven fibrous material, which is sometimes inconvenient for the user of the resin composition, in particular a manufacturer of the insulation material.

WO 98/53001 A relates to a water-soluble urea-extended phenol-formaldehyde resole resin stabilized with an alkanolamine alone or combined with a monosaccharide or disaccharide, methods of manufacturing the resin and using it, and products prepared using the resin.

US 5708121 A relates to an emulsifiable melamine-modified phenolic resole resin composition useful as a binder for glass fibers. It is more particularly directed to the process of preparing the resole resin composition using an alkaline condensation in the presence of a polyhydroxyl compound.

GB 1155004 relates to resinous compositions and particularly to compositions based on phenolic resins and which may serve as binding agents for consolidating the elements of structural units where such elements are of a porous character.

US 4339361 relates to resins suitable for use in binder systems for bonding mineral fibre products. The resins are water-dilutable, thermo-setting phenol-formaldehyde resins of the resol type which are prepared from phenol, formaldehyde, an amide type compound and mono- or oligosaccharides, or water-soluble polysaccharides.

The object of the invention therefore is to provide a resin composition that does not, or to a reduced extend, have the mentioned disadvantages, in particular a resin composition that has a good storage water dilutability also without ammonia, has reduced emissions of phenol and formaldehyde during curing and an acceptable or good retention of the mechanical properties, in particular the wet strength, of the cured resin.

It was surprisingly found that the object could be achieved in a water dilutable resin composition comprising a resin that is a reaction product of an aldehyde and a hydroxyl-aromatic compound, said composition further comprising an amino compound comprising 2 - 6 amino groups and a sugar alcohol, wherein the resin has an initial molar ratio of aldehyde to hydroxyl-aromatic compound from 2.3 to 5.5, a ratio of resin to amino compound plus sugar alcohol of 45:55 to 70:30 parts by weight, a ratio of amino compound to resin between 20:80 and 50:50 parts by weight and a ratio of sugar alcohol to resin plus amino compound is between 5:95 and 30:70 parts by weight.

The hydroxyl-aromatic compound is preferably chosen from the group of substituted or unsubstituted mono- or polycyclic phenols, preferably phenol. The aldehyde is preferably chosen from the group of formaldehyde and lower alkyl (C1 -C4) mono- or di-aldehydes (for example glyoxal) or formaldehyde precursors like paraformaldehyde or tri-oxane that can generate formaldehyde in-situ in the resin composition. Preferably, the resin is a reaction product of a phenol and formaldehyde. Preferably, the amino compound is selected from the group consisting of urea, dicyandiamide or melamine, most preferably urea. The amino compound can also be mixtures of two or more different amino compounds. The aldehyde, phenol or amino compound can also be mixtures of two or more different aldehydes, phenols or amino compounds respectively.

A sugar alcohol is different from sugar. Sugars contain either aldehyde groups (-CHO) or ketone groups (C=O), where there are carbon-oxygen double bonds, making the sugars reactive. Sugar alcohols are a hydrogenated (or a reduced) form of sugar wherein the carbonyl group (aldehyde or ketone) of the sugar has been reduced to a primary or secondary hydroxyl group. The sugar alcohol is preferably selected from the group consisting of glycerol, xylitol, mannitol, sorbitol, lactitol, isomalt, erythritol, maltitol syrup, water soluble hydrogenated starch, hydrolysate maltitol. The addition of sugar alcohols results in a resin which is partially based on renewable resources, which is desired because of environmental reasons. In this context, glycerol is especially preferred, because it is a waste product of the production of biodiesel and is inexpensive. The sugar alcohol can also be mixtures of two or more different sugar alcohols.

The inventors have found that the presence of sugar alcohols leads to a significant reduction of the emissions of phenol and formaldehyde, whereas there is no significant influence on the strength of the resulting resin. As illustrated by the examples described herein, sugar alcohols have clear advantages over sugars, in particular in wet strength and in lower formaldehyde and phenol emissions. This is particularly surprising in view of US 4,335,361. This patent publication describes compositions comprising water dilutable phenol formaldehyde resin, which is extended with an amide and sugar. It is described that sugars, as opposed to sugar alcohols and polyols, improve the wet strength and do not have excessively long gel times. The inventors have instead found that sugar alcohols are more effective in reducing volatile emissions and do get integrated in the resin on curing, resulting in a low sugar alcohol washout and high wet strength, when the components of the resin composition are chosen in the right amounts as specified herein, in particular when the curing of the resin is performed at a temperature of at least 170°C, and in particular when the resin composition comprises a latent curing catalyst, that produces an acid at the curing temperature, preferably ammonium sulphate.

The ratio of resin to amino compound plus sugar alcohol is between 45:55 to 70:30, preferably 50:50 to 70:30 and most preferably 55:45 to 70:30 parts by weight. It was found that the minimum amount of resin (and maximum amount of extender amino compound plus sugar alcohol) is necessary to achieve good retention of mechanical properties. It was found that the sugar alcohols are integrated into the resin on curing. On the other hand, in view of cost-price and to achieve sufficient reduction of volatiles emission during curing, the minimum amount of amino compounds and sugar alcohol is preferably as high as possible, but not higher than 55 wt%. In view of the above considerations, the ratio of amino compound to resin is more than 20:80, preferably more than 25:75 and more preferably more than 30:70, but preferably less than 50:50, more preferably less than 40:60 parts by weight. The ratio of sugar alcohol to resin plus amino compound is between 5:95 and 30:70 parts by weight.

It is noted that phenol formaldehyde resin compositions comprising sugar alcohols are known in the art, for example in US2006094853, for the production of composite boards. In this prior art resin the resin is essentially different and the sugar alcohol is added as a plasticizer for the highly condensed resin. In the prior art resin the phenolic compound is condensed with relatively low amount of formaldehyde, which will leave too high amount of free phenolic compound in low condensed resin composition for the envisaged use for binding nonwoven fibrous insulating materials. Furthermore, the prior art PF resin is not highly water dilutable and not low viscous as described in more detail below. Furthermore, the flash point is too low for a safe production of mineral wool and the alkalinity is too high (thus the final wool produced would contain a lot of salts which would make the product hydrophilic, which is undesired for the use as insulation materials). In the resin composition according to the invention the sugar alcohol surprisingly does not act as a plasticizer. Without wishing to be bound by theory it is believed that the sugar alcohols prevent evaporation of free phenol and formaldehyde to a much larger extend than would be expected by a simple dilution effect during the drying of the resin solution and that at some stage during the drying and curing of the resin, the sugar alcohol reacts and binds into the network of the cured resin and hence does not act as plasticizer in the resin and the strength of the cured resin is not or only slightly weakened upon addition of the sugar alcohol. The storability of the resin is not negatively influenced upon addition of the sugar alcohol.

It is noted that EP1226749 describes a phenol formaldehyde resin for use as a binder in hygroscopic fiber products. The resin has improved wetting properties by inclusion of a polyalcohol, preferably diethyleneglycol, which evaporates during the curing of the resin at high temperature. It is described that the resin can be modified with urea or melamine by post-condensation. The sugar alcohols in the resin composition according to the invention have boiling point above the curing temperature of the resin and do not substantially evaporate during the curing. The resin composition is cured at a temperature below the boiling temperature of the sugar alcohol. Further, in the composition of the invention the amino compound, preferably urea, is added separately after the resin forming reaction. The amino compound does not substantially react with the resin but reacts with the excess formaldehyde forming separate components. This is important in view of lowering of the emission values, whilst keeping infinite dilutability and low spraying viscosity.

For the envisaged application as a binder in nonwoven fibrous insulating materials, it is required that the resin is water dilutable. In order to be water dilutable the resin must not be highly condensed and hence preferably comprises at least 80, preferably at least 90 wt% methylolated phenols. The resin preferably has a degree of polymerization (condensation) such that a solution of the resin in water has a viscosity of less than 70, preferably less than 60 and more preferably less than 50 mPa.s at a resin content up to 60 weight percent of the resin in water.

To achieve the low viscosity and high solubility the resin is not highly condensed, preferably having a major part (more than 50, more preferably more than 60 and even more preferably at least 70wt%) of molecules with only one hydroxyl-aromatic, preferably phenolic, compound, a minor part (less than 50, more preferably less than 40 and even more preferably at least 30wt%) of dimer molecules having two hydroxyl-aromatic compounds and preferably less than 20, more preferably less than 10 and most preferably less than 5 wt% of polymeric compounds having 3 or more hydroxyl-aromatic compounds. The weight percentage can be determined by GPC.

Ammonia can be added to the resin composition just before use to temporally increase the water dilutability of such resin. However, it is preferred that the resin is chosen such that it is water dilutable even without addition of ammonia to have good long-term storage stability. It is required that the aqueous resin composition is stable, i.e. remains clear, for at least 2 minutes at ambient temperature. The resin composition however has the property that it is less stable at higher water contents. Preferably, the resin in the resin composition is water dilutable in a ratio of resin to water of at least 1:4 parts by weight, preferably at least 1:10 and most preferably at least 1 to 20 parts by weight (called infinite when stable for at least 2 minutes).

In view of the limited stability of the diluted aqueous solution and to reduce transport costs, the resin composition is preferably delivered to the insulation material manufacturer as a concentrated solution. Before use the resin composition is diluted with water to the desired concentration level needed for the application.
The resin composition may comprise 5 - 90 wt% of water (wt% relative to the total composition weight). In application of the resin composition by spraying it is preferred to have dry resin solids content between 2 and 25 wt%, preferably between 3 and 20 wt%. It is noted that the diluted resin composition according to the invention can also be prepared on-site by the end-user shortly before use by adding not only water for diluting, but also adding one of the components of the resin composition according to the invention. The present invention also covers the use of a concentrated solution of the resin and optionally also the sugar alcohol or the amino compound for the manufacture of a resin composition according to the invention described above. In particular, the invention relates to the use of a water dilutable resin composition comprising a resin that is a reaction product of an aldehyde and a hydroxyl-aromatic compound, optionally comprising an amino compound comprising 2 - 6 amino groups or a sugar alcohol, which resin has an initial molar ratio of aldehyde to hydroxyl-aromatic compound is from 2.3 to 5.5, for the manufacture of a resin composition according to the invention. In this process it is preferred in view of process economy to first add sugar alcohol and amino compound as a concentrated solution or more preferably as a solid and then dilute with water.

The resin composition preferably also comprises a latent curing catalyst (preferably ammoniumsulphate). A curing catalyst further reduces aldehyde and phenol emissions. The resin composition may further comprise optional fiber adhesion promoters (preferably silanes), optional solubility improver (preferably ammonia), optional solution viscosity modifiers, stabilisers, silicone oil or dust oil.

The invention further relates to a process for the preparation of a resin composition according to the invention, wherein an aldehyde and a hydroxyl-aromatic compound, preferably formaldehyde and phenol, are reacted in aqueous solution in the presence of a base catalyst, preferably in an amount between 0.1 and 3 wt% (relative to the total solution weight) wherein aldehyde is present in excess relative to the amount of hydroxyl-aromatic compound, preferably with a molar ratio between 2.3 to 5.5 and wherein after the reaction an amino compound comprising 2 - 6 amino groups, preferably urea, is added and wherein a sugar alcohol is added to the aqueous solution before, during or after amino compound addition and before, during or more preferably after the reaction between the aldehyde and the hydroxyl-aromatic compound.
The amino compound reacts with the excess aldehyde and does not or only to limited extent react with the hydroxyl-aromatic formaldehyde reaction product. The amino compound is preferably reacted at lower temperature, i.e. after cooling of the reaction product preferably to a temperature between 35 - 65 °C, to prevent reaction between the reaction product and the amino-compound. The preferences described above for the product correspondingly apply to the process. In the process the amount of free hydroxyl-aromatic compound is typically less than 5, preferably less then 3 and more preferably less then 1 wt% and the amount of free aldehyde is less then 15, preferably less than 10, more preferably less than five and most preferably less than 1 wt% (relative to the total solution weight). As described above, it is contemplated that the amino compound or sugar alcohol or both can also be added by the end user when diluting the resin composition just before applying to the nonwoven fibrous material.

The amino compound is preferably added in an amount equal or more than an amount necessary to react with the excess aldehyde, preferably between 5 to 50 wt% (relative to the total dry solid weight) and the total amount of free hydroxyl-aromatic compound plus aldehyde after the reaction is less than 5, preferably less then 3 and more preferably less then 2 and most preferably less than 1 weight percent (relative to the total solution weight). The molar ratio's of aldehyde to phenolic compound to amino compound, preferably formaldehyde (F), phenol (P) and urea (U) are preferably 1:0.15 - 0.5:0.15 - 0.55, more preferably 1: 0.18 - 0.44:0.18-0.5.

The invention also relates to a resin composition obtainable by the process described above having a solids content in water between 30 and 75 wt% (total dry solid weight relative to the total weight of the resin composition) and to the use of the resin composition according to the invention as a binder material for nonwoven fibrous materials, in particular in fibrous materials wherein the fibers are inorganic fibers, preferably selected from glass fibers, ceramic fibers, slack wool, rock wool or silica alumina wool or asbestos fibers. The invention also relates to an insulation material comprising a non-woven fibrous layer comprising inorganic fibers bonded with a resin composition according to the invention and to a process for the manufacture of such insulation material, comprising spraying of a sprayable dilute aqueous solution of a resin composition which comprises a latent curing catalyst onto a nonwoven layer of inorganic fibers, drying and curing the resin at a temperature of at least 170°C, preferably at least 180°C, more preferably at least 190°C and most preferably at least 200°C. Preferably the curing temperature is lower than 300°C.

In a typical mineral wool factory, stone (or glass) is molten and spun to produce mineral fibres which are collected by randomly depositing on a moving conveyer belt. The aqueous resin composition is sprayed onto these fibres as they are dropping onto the collecting conveyer belt. The layer of fibre with binder is then compressed and shaped into the form of the desired insulation and passed through an oven. In here, the wool is heated until the resin is completely cured, the end product being insulation mats of inorganic fibres bonded together in an organic matrix.

The invention will be illustrated by the examples described below.

### INVENTIVE EXAMPLE 1

800 gram of aqueous phenol (90.5%), 251 ml water, and 44 gram NaOH (50%) were combined and heated to 60°C. Then 1400g gram of formalin (55.3wt% formaldehyde in water) was slowly added during 1 hour, during which time the temperature rose to 65°C. The mixture was stirred at this temperature for additional 4 hours. Then the mixture was cooled to 50°C and 505 gram of urea was added. The mixture was stirred for 30 additional minutes at 35°C. 270 grams of the above mixture were combined with 30 grams of glycerol. The mixture was stirred until the glycerol was completely dissolved. The resin characteristics are summarised in Table 1.

### COMPARATIVE EXPERIMENT 1

A sample was prepares as in "inventive example" 1, but without glycerol. The resin characteristics are summarised in Table 1.

### COMPARATIVE EXPERIMENT 2

A sample was prepared by combining 270 gram of the product obtained in "comparative experiment 1" with 30 gram of sugar. The mixture was stirred until the sugar was completely dissolved. The resin characteristics are summarised in Table 1.

### COMPARATIVE EXPERIMENT 3 and INVENTIVE EXAMPLE 2, 3

789 gram of aqueous phenol (91.8%), 258 ml water, and 44 gram NaOH (50%) were combined and heated to 60°C. Then 1400g gram of formalin (55.3wt% formaldehyde in water) was slowly added during 1 hour, during which time the temperature rose to 65°C. The mixture was stirred at this temperature for additional 4 hours. Then the mixture was cooled to 50°C and 505 gram of urea was added. The mixture was stirred for 30 additional minutes at 35°C.

In example 2 according to the invention 5wt% mannitol was added and in Example 3 according to the invention 15wt% sorbitol was added. In these examples, wt% means "dry sugar alcohol" weight on "dry resin plus amino compound" weight. The resin characteristics are summarised in Table 1. The emission and wet strength test results are summarised in Table 2.

**Table 1. Resin characteristics**

| | | Ex.1 | C1 | C2 (sugar) | C3 | Ex.2 | Ex.3 |
|---|---|---|---|---|---|---|---|
| Solid content | ISO 8618 | 56.9% | 55.8% | 58.2% | 56.0% | 56.8% | 56.8% |
| pH | DIN 16916-02-E | 8.7 | 8.7 | 8.7 | 8.7 | 9 | 8.70 |
| Water dilutability | ISO 8989 | Infinite | Infinite | Infinite | Infinite | Infinite | Infinite |
| B-time (130°C) | DIN 16916-02-C1 | 5 min. 47 sec. | 5 min. 12 sec. | 5 min. 27 sec. | 4 min. 46 sec. | 5 min. 29 sec. | 5 min. 55 sec. |
| Free formaldehyde (after 24 hrs) | ISO 9397 | 0.41% | 0.44% | 0.46% | 0.70% | 0.70% | 0.70% |
| Free Phenol | ISO 8974 | 0.52% | 0.56% | 0.53% | 0.44% | 0.43% | 0.39% |

The B-time characterises the curing rate of the resin. This is the time required by the resin when heated to change from a liquid state to a rubbery-elastomer state (B-state).

### Binder characteristics tests

Before each test a curing catalyst ammoniumsulphate was added to the resin composition in amount of 134 mg per 10 gram of resin.

### Emissions

The resin was cured at 200°C, the emissions were captured in water and afterwards photometrical determined as follows. A glass filter is folded in a test tube. 0.2-0.3 g of resin is dropped onto the filter. The test tube with filter is put in an Erlenmeyer that is closed except for an inlet and an outlet air tube. The outlet tube emerges on one side into the test tube, on the other side it is connected to a heated hose. The Erlenmeyer is put into an oven of 200°C, the emissions are let out of the oven via the hose into three gas flasks connected in series. The first two flasks are each filled with 100 mL of distilled water. The two water flasks in which the emission got captured are combined and the emission is photometrically determined in the water. The emissions were calculated back to dry substance of cured resin and are, therefore, independent of the solid content of the resin. Photometric determination was done using a LASA 100 Photometer and Dr. Lange Testkits (testkit LCK 325 for formaldehyde and testkit LCK 345 for phenol). The results are summarised in Table 2.

### Wet strength

For all tests specimen sticks were prepared with dimensions 22x22x173 mm. 1800g silica sand and 180g resin with a solid content of 40% and 1.44 gram of a 10% solution of γ-aminopropyltriethoxysilane were mixed for 10min: afterwards 135g of the mixture were put into a mould and compressed with a press. The sand resin mixture was cured for 120 min at 180°C. After the curing, the sticks were laid in boiling water for 4 hours. Afterwards the sticks were stored in a 60°C oven for 16 hours. After the 16 hours they were laid into boiling water for 4 hours. Afterwards they were cooled with water for 1 hour and the tensile strength (equipment: Zwick Z010 TN2A) was analysed by 3 point bending test. The results are summarised in Table 2.

**Table 2: emission and wet strength properties**

| | Formaldehyde (mg/gram dry resin) | Phenol (mg/gram dry resin) | Wet strength (N/mm²) |
|---|---|---|---|
| | | | |
| Ex.1 (glycerol) | 11 | 10 | 3.2 |
| Comparative 1 (no glycerol) | 16 | 13 | 4.0 |
| Comparative 2 (sugar) | 13 | 12 | 2.3 |
| Comparative 3 (no sugar alcohol) | 14 | 9.7 | 5.6 |
| Ex.2 (5% mannitol) | 13 | 9.2 | 4.4 |
| Ex.3 (15% sorbitol) | 13 | 7.7 | 4.6 |

## Claims

1. A water dilutable resin composition comprising a resin that is a reaction product of an aldehyde and a hydroxyl-aromatic compound, said composition further comprising an amino compound comprising 2-6 amino groups and a sugar alcohol, wherein the resin has an initial molar ratio of aldehyde to hydroxyl-aromatic compound from 2.3 to 5.5, a ratio of resin to amino compound plus sugar alcohol of 45:55 to 70:30 parts by weight, a ratio of amino compound to resin between 20:80 and 50:50 parts by weight and a ratio of sugar alcohol to resin plus amino compound is between 5:95 and 30:70 parts by weight and wherein the resin has an infinite water dilutability as measured according to ISO 8989 of resin to water of at least 1 to 20 parts by weight which is stable for at least two minutes.

2. The water dilutable resin composition according to claim 1, wherein the resin is a reaction product of a phenol and a formaldehyde, wherein the amino compound is selected from the group consisting of urea, dicyandiamide or melamine, and wherein the sugar alcohol is selected from the group consisting of glycerol, xylitol, mannitol, sorbitol, lactitol, isomalt, erythritol, maltitol syrup, water soluble hydrogenated starch, hydrolysate maltitol.

3. The resin composition according to claim 1 or 2, wherein the resin comprises at least 80 wt% methylolated phenols.

4. The resin composition according to claim 1-3, wherein the resin has less than 20 wt% of polymeric compounds having 3 or more hydroxyl-aromatic compounds.

5. The resin composition according to anyone of claims 1-4, further comprising 5 - 90 wt% of water, wt% relative to the total composition weight.

6. A process for the preparation of a resin composition according to anyone of claims 1 to 5, wherein an aldehyde and a hydroxyl-aromatic compound are reacted in aqueous solution in the presence of a base catalyst, wherein aldehyde is present in excess relative to the amount of hydroxyl-aromatic compound, and wherein after the reaction an amino compound comprising 2-6 amino groups is added and wherein a sugar alcohol is added to the aqueous solution before, during or after amino compound addition and before, during or after the reaction.

7. The process according to claim 6 wherein the resin composition has an amount of free hydroxyl-aromatic compound less than 5 wt% and an amount of free aldehyde less then 15 wt% relative to the total solution weight.

8. A resin composition obtainable by the process according to claims 6 or 7 having a solids content in water between 30 and 75 wt%.

9. The use of a water dilutable resin composition comprising a resin that is a reaction product of an aldehyde and a hydroxyl-aromatic compound which resin has an initial molar ratio of aldehyde to hydroxyl-aromatic compound from 2.3 to 5.5, for the manufacture of a resin composition according to anyone of claims 1-5 or 8.

10. The use of a resin composition according to anyone of claims 1-5 or 8 as a binder material for non-woven fibrous materials.

11. The use according to claim 10 wherein the fibers are inorganic fibers.

12. An insulation material comprising a non-woven fibrous layer comprising inorganic fibers bonded with a resin composition according to anyone of claims 1-5 or 8.

13. A process for the manufacture of an insulation material according to claim 12, comprising spraying of a sprayable dilute aqueous solution of a resin composition according to anyone of claims 1 to 4 which comprises a latent curing catalyst onto a non-woven layer of inorganic fibers, drying and curing the resin at a temperature of at least 170°C but below the boiling temperature of the sugar alcohol.

## Patentansprüche

1. Wasserverdünnbare Harzzusammensetzung, umfassend ein Harz, das ein Reaktionsprodukt eines Aldehyds und einer Hydroxyl-aromatischen Verbindung ist, wobei die Zusammensetzung ferner eine Amino-Verbindung mit 2 bis 6 Amino-Gruppen und einen Zuckeralkohol umfasst, wobei das Harz ein Ausgangsmolverhältnis von Aldehyd zu Hydroxyl-aromatischer Verbindung von 2,3 bis 5,5 aufweist, ein Verhältnis von Harz zu Amino-Verbindung plus Zuckeralkohol von 45:55 bis 70:30 Gewichtsteile, ein Verhältnis von Amino-Verbindung zu Harz zwischen 20:80 und 50:50 Gewichtsteile und ein Verhältnis von Zuckeralkohol zu Harz plus Amino-Verbindung zwischen 5:95 und 30:70 Gewichtsteile beträgt, und wobei das Harz eine unendliche Wasserverdünnbarkeit, wie gemäß ISO 8989 gemessen, von Harz zu Wasser von mindestens 1 bis 20 Gewichtsteilen aufweist, die mindestens zwei Minuten stabil ist.

2. Wasserverdünnbare Harzzusammensetzung nach Anspruch 1, wobei das Harz ein Reaktionsprodukt eines Phenols und eines Formaldehyds ist, wobei die Amino-Verbindung aus der Gruppe bestehend aus Harnstoff, Dicyandiamid oder Melamin ausgewählt ist, und wobei der Zuckeralkohol aus der Gruppe bestehend aus Glyzerin, Xylit, Mannit, Sorbit, Lactit, Isomalt, Erythrit, Maltitsirup, wasserlöslicher hydrierter Stärke, Hydrolysatmaltit ausgewählt ist.

3. Harzzusammensetzung nach Anspruch 1 oder 2, wobei das Harz mindestens 80 Gew.-% methylolierte Phenole umfasst.

4. Harzzusammensetzung nach Anspruch 1 bis 3, wobei das Harz weniger als 20 Gew.-% Polymer-Verbindungen mit 3 oder mehr Hydroxyl-aromatischen Verbindungen aufweist.

5. Harzzusammensetzung nach einem der Ansprüche 1 bis 4, ferner umfassend 5 bis 90 Gew.-% Wasser, Gew.-% bezogen auf das Gesamtzusammensetzungsgewicht.

6. Verfahren zur Herstellung einer Harzzusammensetzung nach einem der Ansprüche 1 bis 5, wobei ein Aldehyd und eine Hydroxyl-aromatische Verbindung in wässeriger Lösung in Anwesenheit eines Basen-Katalysators umgesetzt werden, wobei der Aldehyd im Überschuss relativ zur Menge der Hydroxyl-aromatischen Verbindung vorliegt, und wobei nach der Reaktion eine Amino-Verbindung mit 2 bis 6 Amino-Gruppen zugesetzt wird, und wobei ein Zuckeralkohol der wässerigen Lösung vor, während oder nach dem Zusatz der Amino-Verbindung und vor, während oder nach der Reaktion zugesetzt wird.

7. Verfahren nach Anspruch 6, wobei die Harzzusammensetzung eine Menge an freier Hydroxyl-aromatischer Verbindung von weniger als 5 Gew.-% und eine Menge an freiem Aldehyd von weniger als 15 Gew.-%, bezogen auf das Gesamtlösungsgewicht, aufweist.

8. Harzzusammensetzung, welche durch das Verfahren nach Anspruch 6 oder 7 erhalten werden kann, mit einem Feststoffgehalt in Wasser zwischen 30 und 75 Gew.-%.

9. Verwendung einer wasserverdünnbaren Harzzusammensetzung, umfassend ein Harz, das ein Reaktionsprodukt eines Aldehyds und einer Hydroxyl-aromatischen Verbindung ist, wobei das Harz ein Ausgangsmolverhältnis von Aldehyd zu Hydroxyl-aromatischer Verbindung von 2,3 bis 5,5 aufweist, bei der Herstellung einer Harzzusammensetzung nach einem der Ansprüche 1 bis 5 oder 8.

10. Verwendung einer Harzzusammensetzung nach einem der Ansprüche 1 bis 5 oder 8 als Bindematerial für nicht-gewebte fibröse Materialien.

11. Verwendung nach Anspruch 10, wobei die Fasern anorganische Fasern sind.

12. Isoliermaterial, umfassend eine nicht-gewebte fibröse Schicht, umfassend anorganische Fasern, die mit einer Harzzusammensetzung nach einem der Ansprüche 1 bis 5 oder 8 gebunden sind.

13. Verfahren zur Herstellung eines Isoliermaterials nach Anspruch 12, umfassend ein Sprühen einer sprühbaren verdünnten wässerigen Lösung einer Harzzusammensetzung nach einem der Ansprüche 1 bis 4, die einen latenten Aushärtungskatalysator umfasst, auf eine nicht-gewebte Schicht aus anorganischen Fasern, Trocknen und Aushärten des Harzes bei einer Temperatur von mindestens 170°C, jedoch unter der Siedetemperatur des Zuckeralkohols.

## Revendications

1. Composition de résine diluable dans l'eau comprenant une résine qui est un produit de réaction d'un aldéhyde et d'un composé aromatique de type hydroxyle, ladite composition comprenant en outre un composé amino comprenant de 2 à 6 groupes aminés et un alcool de sucre, dans laquelle la résine possède un rapport molaire initial d'aldéhyde au composé aromatique de type hydroxyle compris entre 2,3 et 5,5, un rapport de résine au composé amino plus alcool de sucre compris entre 45:55 et 70:30 parties en poids, un rapport de composé amino à la résine compris entre 20:80 et 50:50 parties en poids et un rapport d'alcool de sucre à la résine plus composé amino compris entre 5:95 et 30:70 parties en poids et dans laquelle la résine possède une aptitude à la dilution dans l'eau infinie telle mesurée selon ISO 8989 de résine à l'eau comprise au moins entre 1 et 20 parties en poids qui est stable pendant au moins deux minutes.

2. Composition de résine diluable dans l'eau selon la revendication 1, dans laquelle la résine est un produit de réaction d'un phénol et d'un formaldéhyde, dans laquelle le composé amino est choisi parmi le groupe constitué de l'urée, du dicyandiamide ou de la mélamine, et dans laquelle l'alcool de sucre est choisi parmi le groupe constitué du glycérol, xylitol, mannitol, sorbitol, lactitol, isomalt, érythritol, sirop de maltitol, amidon hydrogéné soluble dans l'eau, hydrolysat de maltitol.

3. Composition de résine selon la revendication 1 ou la revendication 2, dans laquelle la résine comprend au moins 80 % en poids de phénols méthylolés.

4. Composition de résine selon l'une quelconque des revendications 1 à 3, dans laquelle la résine possède moins de 20 % en poids de composés polymériques possédant 3 ou plus composés aromatiques de type hydroxyle.

5. Composition de résine selon l'une quelconque des revendications 1 à 4, comprenant en outre entre 5 et 90 % en poids d'eau, pourcentage massique par rapport au poids total de la composition.

6. Processus de préparation d'une composition de résine selon l'une quelconque des revendications 1 à 5, dans laquelle un aldéhyde et un composé aromatique de type hydroxyle sont mis en réaction en solution aqueuse en présence d'un catalyseur basique, dans lequel l'aldéhyde est présent en excès par rapport à la quantité du composé aromatique de type hydroxyle, et dans lequel après la réaction un composé amino comprenant de 2 à 6 groupes amino est ajouté et dans lequel un alcool de sucre est ajouté à la solution aqueuse avant, pendant ou après l'addition du composé amino et avant, pendant ou après la réaction.

7. Processus selon la revendication 6, dans lequel la composition de résine possède une quantité de composé aromatique de type hydroxyle libre de moins de 5 % en poids et une quantité d'aldéhyde libre de moins de 15 % en poids par rapport au poids total de la solution.

8. Composition de résine que l'on peut obtenir par le processus selon la revendication 6 ou la revendication 7 possédant une teneur en matières solides dans l'eau comprise entre 30 et 75 % en poids.

9. Utilisation d'une composition de résine diluable dans l'eau comprenant une résine qui est un produit de réaction d'un aldéhyde et d'un composé aromatique de type hydroxyle, la résine possédant un rapport molaire initial d'aldéhyde au composé aromatique de type hydroxyle compris entre 2,3 et 5.5, destinée à la fabrication d'une composition de résine selon l'une quelconque des revendications 1 à 5 ou la revendication 8.

10. Utilisation d'une composition de résine selon l'une quelconque des revendications 1 à 5 ou la revendications 8 en tant que matériau liant pour des matériaux fibreux non-tissés.

11. Utilisation selon la revendication 10 dans laquelle les fibres sont des fibres inorganiques.

12. Matériau isolant comprenant une couche fibreuse non-tissée comprenant des fibres inorganiques liées avec une composition de résine selon l'une quelconque des revendications 1 à 5 ou la revendication 8.

13. Processus de fabrication un matériau isolant selon la revendication 12, consistant à pulvériser une solution aqueuse diluée pulvérisable d'une composition de résine selon l'une quelconque des revendications 1 à 4 qui comprend un catalyseur de durcissement latent sur une couche non-tissée de fibres inorganiques, sécher et durcir la résine à une température d'au moins 170 °C mais inférieure à la température d'ébullition de l'alcool de sucre.
